Europäisches Patentamt

European Patent Office

Office européen des brevets

(19)

(11) Publication number: **0 034 812**
**B1**

(12) # EUROPEAN PATENT SPECIFICATION

(45) Date of publication of patent specification: **26.06.85**

(51) Int. Cl.⁴: **H 04 N 9/09,** G 02 B 27/10

(21) Application number: **81101196.4**

(22) Date of filing: **19.02.81**

(54) **Color separation optical system for color television camera.**

(30) Priority: **22.02.80 JP 21216/80**

(43) Date of publication of application:
**02.09.81 Bulletin 81/35**

(45) Publication of the grant of the patent:
**26.06.85 Bulletin 85/26**

(84) Designated Contracting States:
**DE FR NL**

(56) References cited:
**US-A-3 956 584**
**US-A-4 171 869**

(73) Proprietor: **Fuji Photo Optical Co., Ltd.**
**1-324 Uetake-cho Omiya-shi**
**Saitama-ken (JP)**

(72) Inventor: **Higuchi, Takeshi**
**3-192 Dote-cho**
**Ohmiya-shi Saitama-ken (JP)**
Inventor: **Yoshikawa, Kazuo**
**2-647 Higashioonari-cho**
**Ohmiya-shi Saitama-ken (JP)**
Inventor: **Buto, Hideo**
**686-3 Ooazakamihideya**
**Okegawa-shi Saitama-ken (JP)**

(74) Representative: **Kador . Klunker . Schmitt-Nilson**
**. Hirsch**
**Corneliusstrasse 15**
**D-8000 München 5 (DE)**

Courier Press, Leamington Spa, England.

## Description

This invention relates to a color separation optical system comprising a plurality of prism blocks including a color separating prism which separates a focused light bundle from a lens incident to an entrance face into a plurality of components to respective image pickup elements and wherein a planar plate having two opposed parallel major faces is disposed between said lens and said entrance face of the color separating prism, said planar plate having a transmitting region through which the whole focused light bundle from the lens is transmitted, and a bias-light receiving region.

Generally, in the color separation optical system for a color television camera, a bias light system should be provided to illuminate the light receiving face of an image pickup element such as an image pickup tube or CCD (charge coupled device) for improving various properties thereof such as rise characteristics and after image characteristics. Since the bias light should normally be provided simultaneously on the light receiving faces of image pickup elements for three primary color channels R.G.B., the bias light is usually guided into a color separation optical system so that the bias light may be provided on the three color channels through the color separation optical system. Such a system is advantageous in that only one light source is needed for the bias light and the structure of the system including the light source is made simple. Japanese Patent Publication Nos. 29888/1975 and 29889/1975 show such examples.

Recently, there has been made a trial to improve the sensisitivity of the camera by 18dB in an electric system in order to obtain color images in comparatively dark scenes.

A color separating optical system as referred to at the beginning is disclosed in US—A—3 956 584. One major face of the planar plate of the known system is provided with a ring-shaped grating outside the transmitting region of the planar plate. A bias-light source is disposed in front of a flat boundary face functioning as a bias-light incident face of the planar plate. A part of the bias-light is subject to total internal reflections on the major faces of the planar plate. There is some chance that some of the bias-light rays meeting the ring-shaped diffraction grating are caused to emit from the boundary surface of the planar plate. The transmittance of the planar plate is reduced if the diffraction grating is of amplitude-type. The image focusing performance is ruined if the diffraction grating is of the phase-type. Accordingly, the diffraction grating must be located outside the effective light bundle. As a result, about 15% of the light diffused from the diffraction grating is lost without entering the color separating prism. Further, among the light from the light source entering the planar plate on which the diffraction grating is provided, the light which is not diffused by the grating passes the planar plate and is mostly lost. As a further drawback, the light diffracted by that part of the grating which is on the bias-light source side is balanced with the amount of the light diffracted by that part of the grating which is on the opposite side. This results in unbalanced bias-light or, in other words, in non-uniform bias light illumination. Furthermore, the diffracting grating increases the costs for manufacturing the planar plate.

US—A—4 171 869 discloses a color separation prism system wherein a small prism block is attached to one corner of the color separating prism. The small prism block guides the bias-light towards reflecting faces provided at the entrance face of the color separating prism. The reflecting faces cause the bias-light to enter the entrance face of the color separating prism. The reflecting faces are symmetric with respect to the optical axis of the focused image light from the lens. Therefore, the bias-light reflected by the reflecting surfaces advances on light paths being symmetric with respect to the optical axis. There are, however, some light paths on which the bias-light advances without being reflected by the reflecting surface. The light paths not reflected by the reflecting surfaces are not symmetric with respect to the optical axis.

Recently, there have been developed highly sensitive cameras the sensitivity of which is enhanced by 18dB. Such highly sensitive cameras are adversely affected by non-uniformities of the bias-light illumination caused by non-reflected bias-light of the color separation optical system comprising a small prism block or by the unbalance of the color separation optical system using the planar plate provided with the ring-shaped diffraction grating.

It is the problem to be solved by the invention to provide a color separation optical system of the type referred to at the beginning which permits a highly uniform bias-light illumination, can be produced at relatively low costs and has only small losses of bias-light.

This problem is solved in a color separation optical system of the type defined in the preamble of claim 1 by the features contained in the characterizing clause of claim 1.

The present invention is advantageous because there is no loss of bias-light because the bias-light is almost totally reflected and diffused by the reflecting surfaces of the planar plate and the reflecting surfaces are able to be inclined at desired angles. Since the bias-light always enters the color separation prism through the reflecting surfaces, uniform bias-light can be obtained at low cost.

The invention and advantages of the invention will now be explained by means of preferred embodiments of the invention with reference to the enclosed drawings.

Figure 1 is a perspective view of an example of a prior art color separation optical system provided with a bias light device for a color television camera,

Figure 2 is a plan view of the example of a prior art as shown in Figure 1,

Figure 3 is a perspective view of an embodiment of a color separation optical system in accordance with the present invention,

Figure 4 is a plan view of the embodiment as shown in Figure 3,

Figure 5 is a plan view of another embodiment of the present invention, and

Figure 6 is a plan view of still another embodiment of the present invention.

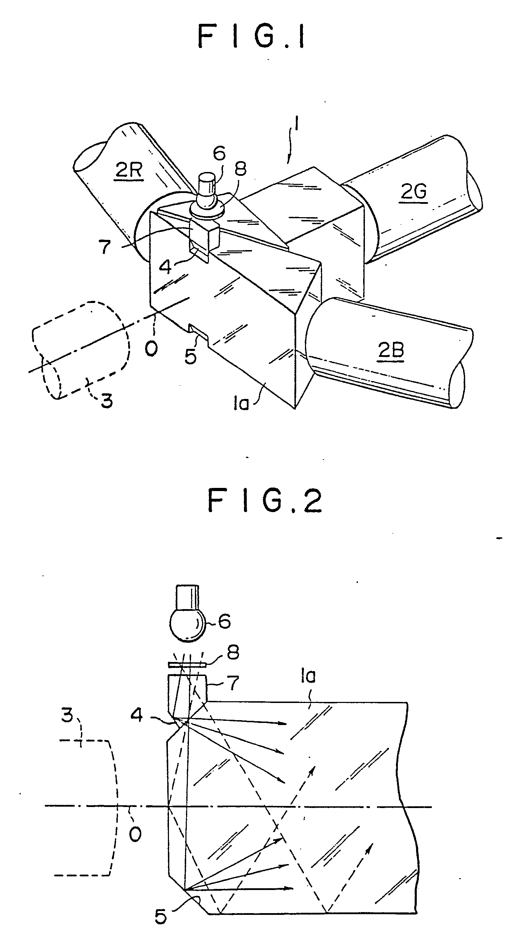

The above mentioned prior art disclosed in US—A—4 171 869 will hereinbelow be described in more detail with reference to Figures 1 and 2. A prism type color separation optical system 1 consisting of three prism blocks is located between a taking lens 3 of the television camera having an optical axis O and image pick up elements 2R, 2G, 2B like image pick up tubes and separates an image from the taking lens 3 into three color components or R (red), G (green) and B (blue). The prism type color separation optical system 1 has reflecting surfaces 4 and 5 in a part of the first prism 1a having an entrance face serving as an entrance face of the whole optical system 1. The reflecting surfaces 4 and 5 are formed at the upper and lower corners of the front entrance face of the first prism block 1a. A bias light source 6 is located outside the optical system 1 beside the front face of the first prism block 1a as shown in Figures 1 and 2. A small prism block 7 is attached to one corner of the first prism block 1a to guide in the bias light from the light source 6 into the first prism block 1a. The bias light from the bias light source 6 is, as shown in Figure 2, reflected by the reflecting surfaces 4 and 5 after passing through the small prism block 7, and then separated into three color components by the color separation optical system 1 and received by the image pick up elements 2R, 2G, 2B. In front of the small prism block 7 is located a color balancing control fiter 8 to control the amount of bias light. The reflecting surfaces 4 and 5 are made into light diffusing faces or toric faces in order to uniformly illuminating the light receiving faces of the image pick up elements.

As already mentioned, there is a problem as follows. As shown in Figure 2, the desirable bias light reflected by the reflecting surfaces 4 and 5 advances as shown by arrowed solid lines. At the same time, however, there are some light paths in which the bias light advances without being reflected by the reflecting surfaces 4 and 5 as shown by arrowed broken lines. The bias light not reflected by the reflecting surfaces 4 and 5 does not advance in paths symmetric with respect to the optical axis O and accordingly does not illuminate the image pick up elements uniformly. However, the amount of the bias light not reflected by the reflecting surfaces 4 and 5 is so small that there is no significant problem for the uniformity of bias light illumination. In the aforementioned recently developed high sensitive camera having enhanced sensitivity of 18dB, however, the not-reflected bias light affects the uniformity of the bias light illumination.

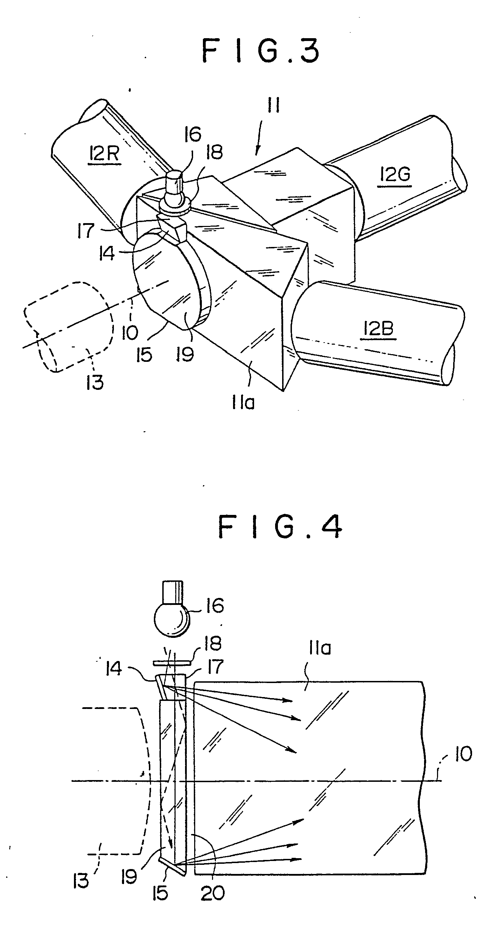

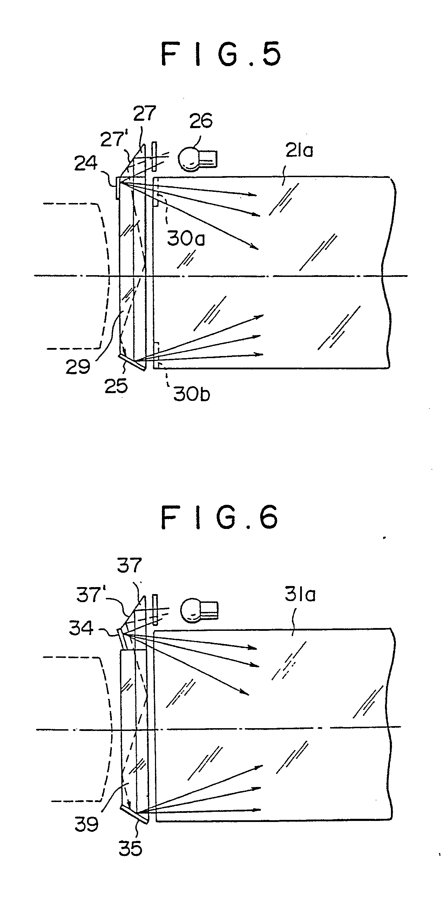

Now the present invention will be described in detail with reference to the accompanying drawings particularly referring to Figures 3 to 6. A first embodiment of the present invention will be described referring to Figures 3 and 4, and second and third embodiments will be described referring to Figures 5 and 6, respectively.

Referring to Figures 3 and 4, a plane parallel plate 19 is located with an air gap 20 in front of the first prism block 11a of a color separation optical system 11 consisting of three prism blocks for three color components provided with image pick up elements 12R, 12G, 12B like image pick up tubes. The color separation optical system 11 is provided between a taking lens 13 and the image pick up elements similarly to the foregoing prior art. The plane parallel plate 19 has a size large enough to cover the whole light flux coming from the taking lens 13. The opposite faces of the plane parallel plate 13 are parallel to the entrance face of the first prism block 11a. The plane parallel plate 19 has at its upper and lower ends light reflecting faces 14 and 15 to reflect bias light coming from a bias light source 16 located beside the plane parallel plate 19 toward the entrance face of the first prism block 11a.

In more detail, the plane parallel plate 19 is provided with at its lower end a reflecting surface 15 formed as a facet of the plane parallel plate 19 and at its upper end another small prism block 17 attached thereto. The small prism block 17 has a reflecting surface 14 to reflect the bias light toward the entrance face of the first prism block 11a. The reflecting surfaces 14 and 15 are made into light diffusing faces or toric faces to enhance the uniformity of bias light illumination.

As shown in Figure 4, the bias light reflected by the reflecting surfaces 14 and 15 is reflected toward the entrance face of the first prism block 11a and caused to advance in desirable paths symmetric with respect to the optical axis O of the optical system 11. Further, the light coming from the bias light source 16 and not being reflected by the reflecting surface 14 or 15 advances within the plane parallel plate 19 totally reflected by the opposite surfaces of the plate 19 and does not advance toward the entrance face of the prism block 11a. The bias light not reflected by the reflecting surfaces 14 and 15 is indicated by broken lines with an arrow in Figure 4. Therefore, the bias light not reflected by the reflecting surface 14 or 15 is not received by the image pick up elements 12R, 12G, 12B. There is, therefore, no fear of nonuniform illumination of the bias light upon the image pick up elements. In Figures 3 and 4, the reference numeral 18 designates a color balancing control filter as is used in the conventional color separation optical system.

It should be understood that the bias light reflecting surfaces 14 and 15 may not always be located at symmetric positions but may be divided into a larger number of reflecting surfaces positioned around the plane parallel plate at its periphery. Further, it should be noted that the small prism 17 may not be provided and the upper reflecting surface 14 may be formed at a part of the plane parallel plate itself or may be replaced by a different reflecting means provided on the periphery of the plane parallel plate 19.

Further, it should be noted that the color separation optical system may not be of the type as shown in Figures 1 to 6, i.e. Phyllips type, but may be of a different type using prisms.

Now referring to Figure 5, a second embodiment of the present invention will be described in detail. This embodiment aims to make the size of the color separation optical system small by changing the position of the bias light source as shown at 26. Similarly to the first embodiment, a plane parallel plate 29 is provided with an air gap in front of the entrance face of the first prism block 21a of a color separation optical system. The plane parallel plate 29 has at its upper and lower ends bias light reflecting surfaces 24 and 25 to reflect the bias light toward the entrance face of the prism block 21a. A small prism 27 is located at the upper end of the plane parallel plate 29 to reflect the bias light from the light source 26 toward the lower reflecting surface 25 via its reflecting surface 27'. The reflecting surface 27' of the small prism block 27 may be a normal mirror reflecting surface, but the reflecting surfaces 24 and 25 of the plane parallel plate 29 are desired to be light diffusing face or toric faces.

Further, in the second embodiment, it is desirable to make parts 30a and 30b of the entrance face of the first prism block 21a just in front of the reflecting surfaces 24 and 25 into light diffusing surfaces. In this case, the reflecting surfaces 24 and 25 may not be light diffusion faces.

Another embodiment will be described referring to Figure 6. This embodiment is characterised in the small prism block 37 attached to the upper end of the plane parallel plate 39 located with an air gap in front of the first prism block 31a. The plane parallel plate 39 has reflecting surfaces 34 and 35 at its upper and lower ends. The upper reflecting surface 34 is formed at a part of the small prism block 37 to reflect the bias light toward the entrance face of the first prism block 31a in a similar manner as in the first embodiment. The small prism block 37 has a reflecting surface 37' to reflect the bias light from the light source toward the lower reflecting surface 35 and also to have the reflecting surface 34 to reflect the bias light toward the first prism block 31a.

In both the second and third embodiments, the bias light not reflected by the reflecting surfaces 24, 25, 34, 35 is totally reflected by the opposite faces of the plane parallel plate 29, 39 and is not received by the image pick up elements.

Although some part of the bias light not reflected by the reflecting surfaces 24, 25, 34, 35 is reflected by the lower reflecting surfaces 25, 35, the light reflected thereby does not affect the nonuniformity of the bias light since it is not direct illumination from the reflecting surface 37' of the small prism block 37 advancing in a wrong direction through the optical system.

**Claims**

1. A color separation optical system comprising a plurality of prism blocks including a color separating prism (11a, 21a, 31a) which separates a focused light bundle from a lens (13) incident to an entrance face into a plurality of components to respective image pick-up elements (12R, 12G, 12B), and planar plate (19, 29, 39) having two opposed parallel major faces disposed between said lens (13) and said entrance face of the color separating prism (11a, 21a, 31a), said planar plate having at least a pair of light redirecting means (14, 15; 24, 25; 34, 35) which redirect bias-light to said entrance face of the color separating prism (11a, 21a, 31a), and a transmitting region extending between said pair of light redirecting means (14, 15; 24, 25; 34, 35) for transmitting the whole focused light bundle from the lens (13) to said entrance face of the color separating prism (11a, 21a, 31a) and for transmitting the bias-light from a bias-light source (16, 26) to said light redirecting means (14, 15; 24, 25; 34, 35) by internal total reflection at the inner surface of said two opposed parallel major faces functioning as reflecting surfaces for said bias-light, characterized in that the light redirecting means (14, 15; 24, 25; 34, 35) are in the form of reflecting surfaces (14, 15; 24, 25; 34, 35) at least one of which is inclined with respect to the major faces of the plate and provided at a marginal portion of the planar plate for reflecting the bias-light from the bias-light source transmitting through the planar plate guided by the internal total reflection towards the entrance face of the color separating prism (11a, 21a, 31a) transmitting through one of said two opposed parallel major faces.

2. A color separation optical system as defined in Claim 1 characterized in that said planar plate (19; 29; 39) is provided at its periphery with a small prism block (17; 27; 37) for reflecting the bias-light toward said reflecting surfaces (14, 15; 24, 25; 34, 35).

3. A color separation optical system as defined in Claim 2, characterized in that said small prism block (17; 27; 37) is provided with a light reflecting surface (14; 24; 34) for reflecting the bias-light directly onto the entrance face of the color separating prism (11a; 21a; 31a).

4. A color separation optical system as defined in Claim 1, 2, or 3, characterized in that said reflecting surfaces (14, 15; 24, 25; 34, 35) are made into light diffusing faces.

5. A color separation optical system as defined in Claim 1, 2 or 3, characterized in that said reflecting surfaces are made into toric faces.

6. A color separation optical system as defined in Claim 1, 2 or 3, characterized in that said entrance face is provided with light diffusing parts (30a, 30b) at the portions where the bias-light reflected by said reflecting surfaces (24, 25) passes.

## Patentansprüche

1. Optische Farbensepariereinrichtung, umfassend mehrere Prismenblöcke mit einem Farbenseparierprisma (11a, 21a, 31a) welches ein von einem Objektiv (13) auf eine Eintrittsfläche fallendes fokusiertes Lichtbündel in mehrere Komponenten für jeweilige Bildaufnahmeelemente (12R, 12G, 12B) separiert, sowie mit einer ebenen Platte (19, 29, 39), die zwei einander gengenüberliegende Hauptflächen aufweist, die zwischen dem Objektiv (13) und der Eintrittsfläche des Farbenseparierprismas (11a, 21a, 31a) angeordnet sind, wobei die ebene Platte mindestens ein Paar von Lichtumlenkeinrichtungen (14, 15; 24, 25; 34, 35; besitzt, die Vorlicht auf die Eintrittsfläche des Farbenseparierprismas (11a, 21a, 31a) lenkt, und eine sich zwischen dem Paar von Lichtumlenkeinrichtungen (14, 15; 24, 25; 34, 35) erstreckende Übertragungszone besitzt zum Übertragen des gesamten fokusierten Lichtbündels von dem Objektiv (13) zu der Eintrittsfläche des Farbenseparierprismas (11a, 21a, 31a) und zum Übertragen des Vorlichts von einer Vorlichtquelle (16, 26) zu der Lichtumlenkeinrichtung (14, 15; 24, 25; 34, 35) durch innere Totalreflexion an der Innenseite der zwei einander gegenüberliegenden parallelen Hauptflächen, die für das Vorlicht als reflektierende Flächen fungieren, dadurch gekennzeichnet, daß die Lichtumlenkeinrichtungen (14, 15; 24, 25; 34, 35) die Form von reflektierenden Flächen (14, 15; 24, 25; 34, 35) aufweisen, von denen mindestens eine in Bezug auf die Hauptflächen der Platte geneigt ist und an einem Randabschnitt der ebenen Platte angeordnet ist, um das von der Vorlichtquelle kommende Vorlicht, welches — durch die interne Totalreflexion geleitet — die ebene Platte durchsetzt, in Richtung auf die Eintrittsfläche des Farbenseparierprismas (11a, 21a, 31a) zu lenken, wobei es durch eine der zwei einander gegenüberliegenden parallelen Hauptseiten hindurchtritt.

2. Einrichtung nach Anspruch 1, dadurch gekennzeichnet, daß die ebene Platte (19; 29; 39) an ihrem Umfang mit einem kleinen Prismenblock (17; 27; 37) ausgestattet ist, um das Vorlicht in Richtung auf die reflektierenden Flächen (14, 15; 24, 25; 34, 35) zu reflektieren.

3. Einrichtung nach Anspruch 2, dadurch gekennzeichnet, daß der kleine Prismenblock (17; 27; 37) mit einer lichtreflektierenden Fläche (14; 24; 34) ausgestattet ist, um das Vorlicht direkt auf die Eintrittsfläche des Farbenseparierprismas (11a; 21a; 31a) zu reflektieren.

4. Einrichtung nach Anspruch 1, 2 oder 3 dadurch gekennzeichnet, daß die reflektierenden Flächen (14, 15; 24, 25; 34, 35) als lichtdiffundierende Flächen ausgebildet sind.

5. Einrichtung nach Anspruch 1, 2 oder 3, dadurch gekennzeichnet, daß die reflektierenden Flächen als thorische Flächen ausgebildet sind.

6. Einrichtung nach Anspruch 1, 2 oder 3, dadurch gekennzeichnet, daß die Eintrittsfläche mit lichtdiffundierenden Teilen (30a, 30b) an solchen Abschnitten ausgestattet ist, an denen das von der den reflektierenden Flächen (24, 25) reflektierte Vorlicht hindurchtritt.

## Revendications

1. Système optique de séparation des couleurs, comportant une pluralité de blocs en forme de prismes incluant un prisme (11a, 21a, 31a) de séparation des couleurs, qui sépare un faisceau de lumière focalisée délivrée par une lentille (13) et tombant sur une face d'entrée, en une pluralité de composantes dirigées vers des éléments respectifs formant capteurs d'images (12R, 12G, 12B), et une plaque plane (19, 29, 39) comportant deux surfaces principales parallèles et opposées et qui est située entre ladite lentille (13) et ladite face d'entrée du prisme (11a, 21a, 31a) de séparation des couleurs, ladite plaque plane comportant au moins deux dispositifs de renvoi de la lumière (14, 15; 24, 25; 34, 35), qui renvoient la lumière d'éclairage arrière vers ladite face d'entrée du prisme (11a, 12a, 31a) de séparation des couleurs, et une région de transmission s'étendant entre ledit couple des dispositifs de renvoi de la lumière (14, 15; 24, 25; 34, 35) et servant à transmettre l'ensemble du faisceau de lumière focalisé parvenant de la lentille (13) en direction de la face d'entrée du prisme (11a, 21a, 31a) de séparation des couleurs et à transmettre la lumière d'éclairage arrière arrivant d'une source d'éclairage arrière (16, 26) en direction desdits dispositifs de renvoi de la lumière (14, 15; 24, 25; 34, 35) au moyen d'une réflexion interne totale sur la surface intérieure desdites deux faces principales parallèles et opposées agissant en tant que surfaces réfléchissantes pour ladite lumière d'éclairage arrière, caractérisé en ce que les dispositifs de renvoi de la lumière (14, 15; 24, 25; 34, 35) sont réalisés sous la forme de surfaces réfléchissantes (14, 15; 24, 25; 34, 35), dont l'une au moins est inclinée par rapport aux surfaces principales de la plaque et est prévue sur une partie marginale de la plaque plane en vue de réfléchir la lumère d'éclairage arrière envoyée par la source de lumière d'éclairage arrière et transmise par l'intermédiaire de la plaque plane en étant guidée par la réflexion totale interne en direction de la face d'entrée du prisme (11a, 21a, 31a) de séparation des couleurs, moyennant une transmission à travers l'une desdites deux faces principales parallèles et opposées.

2. Système optique de séparation des couleurs selon la revendication 1, caractérisé en ce que ladite plaque plane (19; 29; 39) est munie, sur sa périphérie, d'un petit bloc formant prisme (17; 27; 37) servant à réfléchir la lumière d'éclairage arrière en direction desdites surfaces réfléchissantes (14, 15; 24, 25; 34, 35).

3. Système optique de séparation des couleurs selon la revendication 2, caractérisé en ce que ledit petit bloc formant prisme (17; 27; 37) comporte une surface réfléchissant la lumière (14; 24; 34), servant à réfléchir la lumière d'éclairage arrière directement en direction de la face d'entrée du prisme (11a; 21a; 31a) de séparation des couleurs.

4. Système optique de séparation des couleurs selon la revendication 1, 2 ou 3, caractérisé en ce que lesdites surfaces réfléchissantes (14, 15; 24, 25; 34, 35) sont réalisées sous la forme de faces diffusant la lumière.

5. Système optique de séparation des couleurs selon la revendication 1, 2 ou 3, caractérisé en ce que lesdites surfaces réfléchissantes sont réalisées sous la forme de deux faces toriques.

6. Systèmes optiques de séparation des couleurs selon la revendication 1, 2 ou 3, caractérisé en ce que ladite face d'entrée comporte des parties (30a, 30b) diffusant la lumière, situées dans les zones où passe la lumière d'éclairage arrière réfléchie par lesdites surfaces réfléchissantes (24, 25).

# F I G . I

# F I G . 2

1

# F I G . 3

# F I G . 4

2

# F I G . 5

# F I G . 6